# EUROPÄISCHE PATENTSCHRIFT

(11) **EP 0 698 749 B1**
(45) Veröffentlichungstag und Bekanntmachung des Hinweises auf die Patenterteilung: **19.04.2000**
(21) Anmeldenummer: 95112978.2
(22) Anmeldetag: 17.08.1995
(51) Int. Cl.: F16D 65/16, F16D 55/224

(54) **Zuspannvorrichtung für eine Scheibenbremse**
Disc brake actuator
Actionneur de frein à disque

(30) Priorität: 25.08.1994 DE 4430258
(43) Veröffentlichungstag der Anmeldung: 28.02.1996
(73) Patentinhaber: PERROT BREMSEN GmbH, 68229 Mannheim (DE)
(72) Erfinder: Antony, Paul, D-67550 Worms (DE)
(74) Vertreter: Patentanwälte Leinweber & Zimmermann

(56) Entgegenhaltungen:
- EP-A- 0 291 071
- WO-A-94/25774
- DE-A- 2 057 322
- DE-A- 2 618 966
- DE-A- 4 032 885
- DE-A- 4 307 019

## Beschreibung

Die Erfindung betrifft eine Zuspannvorrichtung einer Scheibenbremse, insbesondere einer Gleitsattelscheibenbremse, mit einer parallel zur Bremsscheibenebene angeordneten Zuspannwelle, die sich auf ihrer bremsscheibenzugewandten Seite an einem in der Richtung der Bremsscheibe beweglichen Druckstück und auf ihrer bremsscheibenabgewandten Seite an einem Element abstützt, zu dem das Druckstück relativbeweglich ist, wobei die Abstützung auf der bremsscheibenzugewandten Seite derart ist, daß die Zuspannwelle bezüglich einer Verdrehung um eine parallel zu ihrer Längsachse liegende erste Achse von dem Druckstück entkoppelt ist, jedoch bezüglich einer Verschiebung der ersten Achse parallel zur Bremsscheibenebene mit dem Druckstück gekoppelt ist, und die Abstützung auf der bremsscheibenabgewandten Seite derart ist, daß die Zuspannwelle bezüglich einer Verdrehung um eine parallel zu ihrer Längsachse liegende, nicht mit der ersten Achse zusammenfallende zweite Achse von dem Element entkoppelt ist.

Eine Zuspannvorrichtung der eingangs genannten Art ist aus der DE 40 32 885 A1 bekannt. Bei der bekannten Zuspannvorrichtung stützt sich die Zuspannwelle auf der bremsscheibenabgewandten Seite über eine kreisbogenförmige Kontur in einer entsprechenden Lagerschale an dem genannten Element, d. h. in diesem Fall an einem Bremssattel, ab. Mithin besteht eine Kopplung zwischen der Zuspannwelle und dem Bremssattel bezüglich einer Verschiebung der zweiten Achse parallel zur Bremsscheibenebene. Daher führt das Druckstück bei Verdrehen der Zuspannwelle eine Pendelbewegung in einer senkrecht zur Bremsscheibenebene liegenden Ebene aus.

Wegen der daraus resultierenden Schrägstellung des Druckstücks kommt es beim Bremsen zu einer entsprechenden Schrägstellung der Bremsbacken, wodurch zum einen der Bremsvorgang selbst leidet, zum anderen aber auch eine ungleichmäßige Abnutzung der Bremsbeläge erfolgt.

Bei den aus den Druckschriften DE 26 14 321 C2, EP 0 291 071 B1, DE 34 11 745 A1 und DE 20 57 322 C3 bekannten Zuspannvorrichtungen sind die Zuspannwelle auf der einen Seite und das Druckstück auf der anderen Seite jeweils durch geeignete Maßnahmen entkoppelt, so daß es zu keiner Pendelbewegung des Druckstückes kommt. Die Entkopplung erfolgt dabei durch eine Kugel, durch eine querverschiebliche Platte bzw. durch einen Stößel zwischen der Zuspannwelle und dem Druckstück. Die Entkopplung führt aber zum einen dazu, daß Zuspannwelle und Druckstück einander nicht halten bzw. führen können, weshalb bei den genannten Zuspannvorrichtungen nach dem Stand der Technik teilweise flexible Halterungen für die Zuspannwelle erforderlich sind, vgl. beispielsweise Feder 86 in der DE 26 14 321 C2. Dadurch wird die Lage der Zuspannwelle instabil, weshalb die Zuspannung ungleichmäßig wird. Darüber hinaus erfolgt beispielsweise bei der Zuspannvorrichtung nach der DE 20 57 322 C3 die Krafteinleitung auf das Druckstück nicht immer an derselben Stelle. Vielmehr verschiebt sich der Ort der Krafteinleitung mit der Position der Rolle 7 in der Nut 9.

Aus der US-A-4,544,045 ist eine Zuspannvorrichtung mit einer Zuspannwelle bekannt, die jeweils über Kippglieder einerseits mit einem Druckstück und andererseits mit dem Sattel verbunden ist. Die Verdrehachse des bremscheibenabgewandten Kippgliedes ist bezüglich einer Verschwenkung um eine seiner Kippachsen von dem Sattel entkoppelt. Die Zuspannwelle ist mit parallel zu der Bremsscheibenebene liegendem Spiel im Sattel gelagert.

Der Erfindung liegt die Aufgabe zugrunde, eine Zuspannvorrichtung der eingangs genannten Art insofern zu verbessern, als nach wie vor Druckstück und Zuspannwelle einander halten bzw. führen, dennoch aber keine Beeinträchtigung der Bremswirkung und keine ungleichmäßige Abnutzung der Bremsbeläge durch eine Pendelbewegung auftreten. Ferner soll der Ort der Krafteinleitung in das Druckstück gleichbleiben.

Erfindungsgemäß wird die gestellte Aufgabe dadurch gelöst, daß die Abstützung auf der bremsscheibenabgewandten Seite derart ist, daß die Zuspannwelle bezüglich einer Verschiebung der zweiten Achse parallel zur Bremsscheibenebene von dem Element entkoppelt ist, und das Druckstück derart gelagert ist, daß es nur senkrecht zur Bremsscheibenebene beweglich ist.

Dabei liegt der Erfindung die verblüffend einfache Erkenntnis zugrunde, daß durch die Entkopplung der Zuspannwelle von demjenigen Element, zu dem das Druckstück relativbeweglich ist, eine "Pendelbewegung" des Druckstücks eliminiert werden kann, so daß ein Ineinandergreifen von Zuspannwelle und Druckstück zur Lagerung bzw. Führung des Druckstücks durch die Zuspannwelle oder umgekehrt zu keinen Nachteilen beim Bremsen bzw. bei der Abnutzung der Bremsbeläge führt, wobei gleichzeitig wegen des genannten Ineinandergreifens die Krafteinleitung auf das Druckstück an immer derselben Stelle erfolgt.

Verglichen mit den bekannten Zuspannvorrichtungen ist die erfindungsgemäße Zuspannvorrichtung kompakter und kommt mit weniger Einzelteilen aus, weil beispielsweise die nach der DE 40 32 885 A1 vorgesehene Drehlagerung der Zuspannwelle im Sattel oder Halteelemente, wie die Feder 86 nach der DE 26 14 321 C2, nicht erforderlich sind.

Besonders einfach wird der Aufbau dann, wenn sich die Zuspannwelle auf der bremsscheibenzugewandten Seite über einen in einer ersten Lagerschale gelagerten Ansatz mit kreisbogenförmiger Außenkontur an dem Druckstück abstützt.

Dabei ist bevorzugt zur Verminderung der Reibkräfte ein Dreh- oder Wälzlager zwischen dem Ansatz und der ersten Lagerschale vorgesehen.

Erfindungsgemäß weiter bevorzugt ist es, daß sich die Zuspannwelle auf der bremsscheibenabgewandten Seite über einen Wälzkörper an dem Element abstützt, der in einer an der Zuspannwelle ausgebildeten zweiten Lagerschale gelagert ist. Durch diese Ausgestaltung ergibt sich eine weitere konstruktive Vereinfachung der erfindungsgemäßen Zuspannvorrichtung.

Der Wälzkörper kann auf verschiedenste Weisen realisiert werden. Beispielsweise kann er die Form einer Kugel haben. Bevorzugt ist es jedoch, daß der Wälzkörper eine Rolle ist.

Zur sicheren Halterung des Wälzkörpers kann es erfindungsgemäß vorgesehen sein, daß die zweite Lagerschale den Wälzkörper um mehr als 180° umschließt.

Zur Verminderung der Reibung ist weiter bevorzugt ein Dreh- oder Wälzlager zwischen dem Wälzkörper und der zweiten Lagerschale vorgesehen.

Um eine über den gesamten Betätigungshub der Zuspannvorrichtung konstante Bremsenübersetzung zu erzielen, kann ferner erfindungsgemäß vorgesehen sein, daß die erste Achse im Ruhezustand der Bremse weiter von der Bremsscheibenebene entfernt ist als die zweite Achse.

Ferner kann erfindungsgemäß das Druckstück im Bremssattel in seitlichen kalottenförmigen Führungen mit geringem Lagerspiel allseitig geführt sein. Dadurch ist eine radiale und seitliche Führung des Druckstücks gewährleistet.

Alternativ kann erfindungsgemäß auch vorgesehen sein, daß die Lagerung für das Druckstück eine Anzahl Teillager umfaßt, wobei sich mindestens zwei Teillager dadurch voneinander unterscheiden, daß sie voneinander unterschiedliche Komponenten auf das Druckstück wirkender Kräfte aufnehmen.

Schließlich kann erfindungsgemäß eine Vorspannung in Richtung eines Lösens der Bremse vorgesehen sein, wobei die Vorspannung bevorzugt mindestens eine das Druckstück in Richtung weg von der Bremsscheibe vorspannende Druckfeder aufweist.

Nachstehend ist die Erfindung anhand bevorzugter Ausführungsbeispiele unter Bezugnahme auf die beiliegende Zeichnung mit weiteren Einzelheiten näher erläutert. Dabei zeigen
- Fig. 1: einen Schnitt senkrecht zur Bremsscheibenachse einer Scheibenbremse mit einer Zuspannvorrichtung nach einem Ausführungsbeispiel der Erfindung,
- Fig. 2: einen Schnitt durch die Scheibenbremse nach Fig. 1, wiederum senkrecht zur Bremsscheibenachse, jedoch auch senkrecht zu dem Schnitt nach Fig. 1, und
- Fig. 3 und 4: vergrößerte Detailansichten der Darstellung nach Fig. 1, und zwar von zwei unterschiedlichen Ausführungsbeispielen der Erfindung.

Bei der in der Zeichnung dargestellten Scheibenbremse handelt es sich um eine Gleitsattelscheibenbremse. Sie weist einen Bremssattel 1 auf, der in üblicher Weise mit seinen beiden Schenkeln eine Bremsscheibe 2 übergreift. Beidseits der Bremsscheibe sind Bremsbeläge 3, 4 an Belagträgern 5 in einem nicht dargestellten Bremsenträger bzw. im Bremssattel 1 geführt und abgestützt. Der Bremssattel 1 ist in nicht näher dargestellter Weise mit Hilfe von Führungsmitteln quer zur Bremsscheibe verschieblich gelagert. Der Bremssattel 1 weist einseitig eine Zuspannvorrichtung 6 zur Betätigung der Bremse auf.

Die Zuspannvorrichtung besteht im wesentlichen aus einem Bremshebel 7, der mit einer parallel zur Bremsscheibenebene angeordneten Zuspannwelle 8 verbunden ist, und einem im Bremssattel 1 verschieblichen Druckstück 9, in das mittig in der Ebene der Bremsenachse A der Zuspannvorrichtung 6 eine Druckspindel 10 eingeschraubt ist. Zur Bremsscheibe 2 weisend ist die Druckspindel 10 mit einem sich am Belagträger 5 abstützenden Druckteil 11 gekoppelt. Das Druckteil 11 erstreckt sich annähernd über die Belagbreite. Das Druckstück 9 ist beispielsweise durch Führungen 25 im Bremssattel pendelfrei verschiebbar (axial) gelagert, wobei die Führungen 25 jeweils Teillager der Lagerung des Druckstücks 9 in dem Sattel 1 darstellen. Dabei unterscheiden sich mindestens zwei einer Gesamtzahl Teillager dadurch voneinander, daß sie voneinander unterschiedliche Komponenten auf das Druckstück 9 wirkender Kräfte aufnehmen. Dadurch wird die Lagerbelastung in Folge von auf das Druckstück 9 einwirkenden Bremsumfangskräften minimiert, wobei darüber hinaus ein Verklemmen ausgeschlossen ist. Weitere Einzelheiten dieser Lagerungsart sind der deutschen Patentanmeldung P 44 16 175.1 vom 6. Mai 1994 zu entnehmen.

Das Druckstück 9 kann allerdings auch in seitlichen kalottenförmigen Führungen allseitig mit geringem Lagerspiel im Bremssattel 1 geführt sein. Zu dieser Ausführung wird auf die DE 43 07 019 A1 verwiesen.

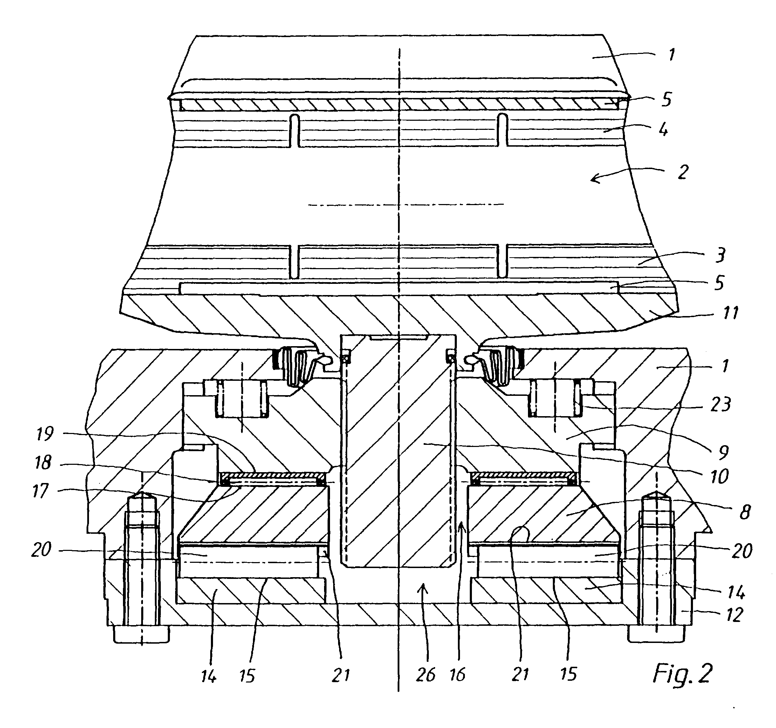

Am Bremssattel 1 ist ein Deckel 12 festgelegt. Damit ist eine Verbindung zu einem nicht dargestellten Bremszylinder hergestellt. Der Bremshebel 7 stellt die Verbindung zwischen dem Bremszylinder bzw. einem ebenfalls nicht dargestellten Bremsgestänge und der Zuspannwelle 8 her. Am Deckel 12 oder diesem vorgelagert ist im Bremssattel 1 in einer Ebene parallel zur Bremsscheibe 2 eine Stützplatte 14 angebracht. Sie weist eine Stützfläche 15 auf, an der sich die Zuspannwelle 8 abstützt. Die Stützplatte 14 kann geteilt oder einstückig sein. Ihre Länge hängt von der nachfolgend erläuterten Ausführung der Zuspannwelle 8 ab. Nach der Fig. 2 ist im mittleren Bereich der Zuspannwelle 8 ein freier Durchgang 16 zur axialen Durchführung der Druckspindel 10 ausgebildet.

Selbstverständlich kann die Zuspannwelle 8 auch ohne freien Durchgang 16, also in einer durchgängigen Kontur, ausgeführt sein, sofern die Zuspannung beispielsweise über zwei Druckspindeln 10 erfolgt, die jeweils am äußeren Ende des Druckstücks 9 eingeschraubt sind. Jedoch kann der freie Durchgang 16 auch bei einer Zuspannung mit zwei Druckspindeln 10 beibehalten werden.

Die besonders kompakte Bauweise der Zuspannvorrichtung ermöglicht die Schaffung eines Freiraumes 26 auf der bremsscheibenabgewandten Seite der Zuspannwelle 8 und damit im kräftefreien Bereich der Bremse. Der Freiraum kann zur Aufnahme einer Nachstellvorrichtung dienen, wie sie beispielsweise in der DE 43 07 018 A1 beschrieben ist. Diese Nachstellvorrichtung zeichnet sich dadurch aus, daß ein zwischen die Zuspannwelle und die Druckspindel geschaltetes Getriebe ein elastisches Element zur Drehkopplung von Zuspannwelle und Druckspindel aufweist. Dadurch kann die bei Spannung des elastischen Elementes gespeicherte Energie zur Nachstellung bei der Bremsentlastung ausgenutzt werden. Die Nachstellvorrichtung kann wegen des ausreichenden Platzangebots als vorgefertigte Baueinheit eingebaut werden. Sie ist geringer Beanspruchung ausgesetzt.

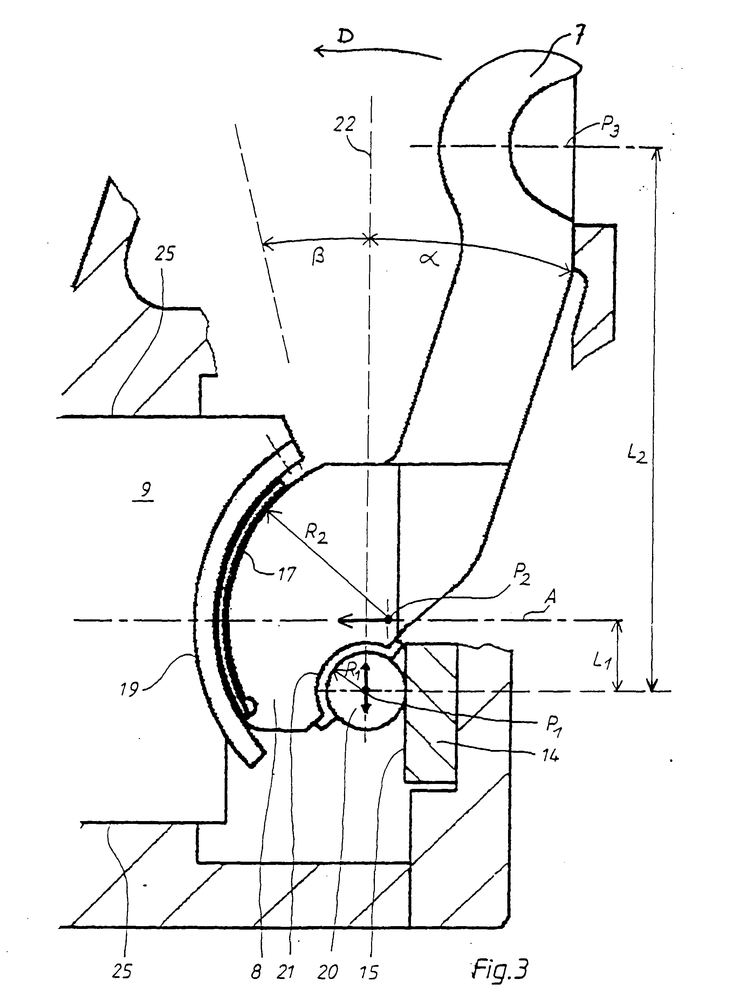

Die Fig. 3 zeigt in einer vergrößerten Darstellung den Aufbau eines Ausführungsbeispiels der erfindungsgemäßen Zuspannvorrichtung, wobei insbesondere die Abstützung der Zuspannwelle 8 gegen den Gleitsattel gezeigt ist.

Die Zuspannwelle 8 weist bremsscheibenzugewandt einen etwa halbkreiszylindrischen Ansatz 17 mit einem Radius R₂ auf. Die Mittelachse P₂ des Zylinders liegt auf der Bremsenachse A, der entlang auch die lineare Krafteinleitung auf das Druckstück 9 erfolgt. In dieser Achse ist/sind auch die Druckspindel/n angeordnet. Die Mantelfläche des Ansatzes 17 erstreckt sich parallel zu der Achse P₂. Der Ansatz 17 ist über eine zwischengelagerte Drehlagerung 18 (Wälz- und/oder Gleitlager) in entsprechenden innenzylindrischen Flächen 19 des Druckstücks 9 gelagert. Dadurch wird zwischen diesen beiden Teilen eine relativ großflächige Anlagenkontur zur allseitigen Abstützung und gleichmäßigen Druckübertragung geschaffen.

Zur Mantelfläche 17 parallel verlaufend erstreckt sich in der Zuspannwelle 8 eine innenzylindrische Kontur 21, in der Wälzkörper 20 mit einem Radius R₁ um ihre Mittelachse P₁ gelagert sind. Der/die Wälzkörper ist/sind andererseits gegen Stützflächen 15 am Bremssattel 1 abgestützt, wobei eine Parallelebene 22 zu der Bremsscheibenebene durch P₁ und parallel zu diesen Stützflächen 15 verläuft.

Mittels mindestens einer Druckfeder 23 wird die Zuspannvorrichtung 6 in Richtung der Stützflächen 15 und damit der Bremshebel 7 gegen eine Sattelanlage 24 vorgespannt.

Bei der in Fig. 3 abgebildeten Zuspannung 6 wird die Exzentrizität aus dem Versatz L₁ zwischen den Achsen P₁, P₂ gebildet, wobei P₂ von der Bremsscheibe 2 aus gesehen hinter der Parallelebene 22 liegt. Der Abstand zwischen P₁ und P₃, dem Angriffspunkt des Druckmittelzylinders, bildet die Strecke L₂. Damit ergibt sich die Bremsenübersetzung aus dem Quotienten L₂/L₁.

Mit dieser Ausgestaltung wird folgender Vorteil erzielt: Bei einem Bremshub des Bremshebels 7 in Richtung D wandert die Schwenkachse P₂ axial entlang der Mittelachse A in Richtung Bremsscheibe 2. Die Linearbewegung wird durch die Entkopplung zwischen den Wälzkörpern 20 und der zugeordneten innenzylindrischen Kontur 21 der Zuspannwelle 8 einerseits sowie den Wälzkörpern 20 und den Stützflächen 15 andererseits sichergestellt.

Unter dem Schwenkwinkel α wandert die Achse P₁ der Wälzkörper 20 auf der Parallelebene 22 abwärts. Überschreitet die Schwenkachse P₂ die Parallelebene 22 bei weiterem Hub unter dem Schwenkwinkel β, wandert die Achse P₁ auf der Parallelebene 22 aufwärts, wobei hierbei zwischen der innenzylindrischen Kontur 21 und den Wälzkörpern 20 eine gegenläufige Bewegung stattfindet. Durch diese Entkopplung wird mit einfachen Mitteln eine kombinierte Dreh-/Rollachse P₁ erzeugt.

Weiterhin wird durch die Entkopplung und die Anordnung der Achse P₂ von der Bremsscheibe 2 aus gesehen hinter die Parallelebene 22 eine über den gesamten Betätigungshub angestrebte konstante Bremsenübersetzung erzielt.

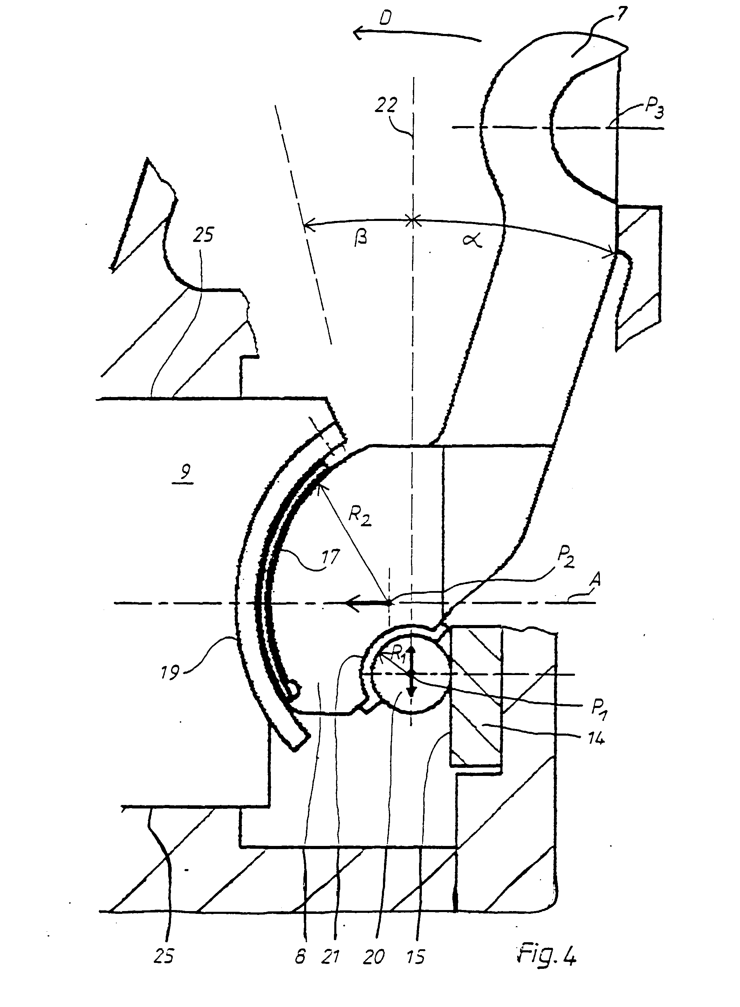

Durch die Ausführung nach Fig. 4 kann das Übersetzungsverhältnis in einfacher Weise progressiv verändert werden, wenn nämlich die Achse P₂ vor der Parallelebene 22 auf der Bremsenachse A (Mittelachse) liegt, wobei die Entkopplung in gleicher Weise wie bereits erwähnt erfolgt.

Durch die oben erwähnte Entkopplung während des Betätigungshubes wird eine absolut lineare Druckstückverschiebung bei wahlweiser Bremsenübersetzung erzielt.

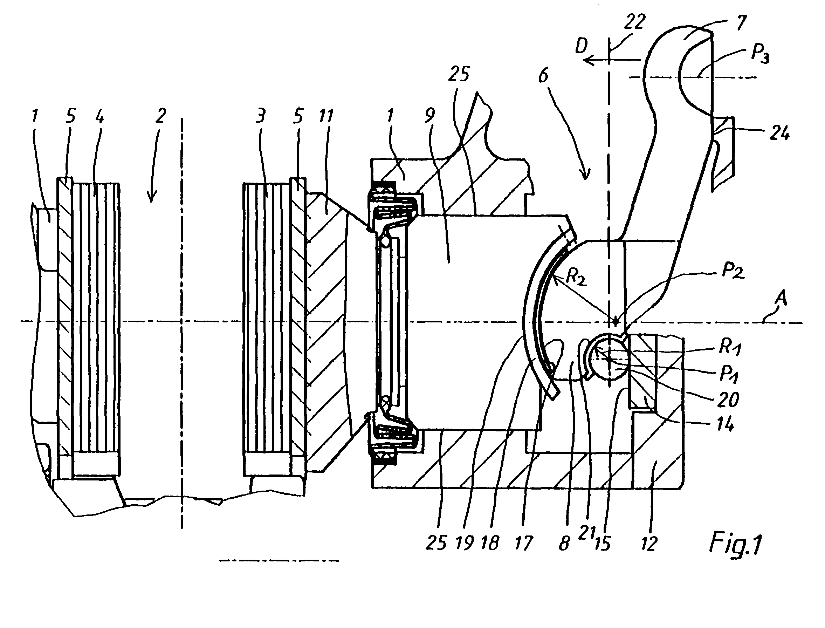

Um den Wälzvorgang zwischen den Wälzkörpern 20 und der innenzylindrischen Kontur 21 zu verbessern, kann ein Gleit- und/oder Wälzlager vorgesehen sein, das in Fig. 1 angedeutet dargestellt ist. Ebenso können die Längen der Lagerungen zwischen der Zuspannwelle 8 und dem Druckstück 9 sowie zwischen den Wälzkörpern 20 und den Stützflächen 15 entsprechend den Bremsenbelastungen gewählt werden.

### Bezugszeichenliste

- 1: Bremssattel
- 2: Bremsscheibe
- 3: Bremsbelag
- 4: Bremsbelag
- 5: Belagträger
- 6: Zuspannvorrichtung
- 7: Bremshebel
- 8: Zuspannwelle
- 9: Druckstück
- 10: Druckspindel
- 11: Druckteil
- 12: Deckel
- 14: Stützplatte
- 15: Stützfläche
- 16: Durchgang
- 17: Ansatz
- 18: Drehlagerung
- 19: innenzylindrische Fläche
- 20: Wälzkörper
- 21: innenzylindrische Fläche
- 22: Parallelebene
- 23: Druckfeder
- 24: Sattelanlage
- 25: Führung
- 26: Freiraum
- A: Bremsenachse
- L₁: Versatz
- L₂: Hebelarm
- P₁: zweite Achse
- P₂: erste Achse
- P₃: Angriffspunkt
- R₁: Radius
- R₂: Radius
- α: Leerhub
- β: Krafthub

## Patentansprüche

1. Zuspannvorrichtung einer Scheibenbremse, insbesondere einer Gleitsattelscheibenbremse, mit einer parallel zur Bremsscheibenebene angeordneten Zuspannwelle (8), die sich auf ihrer bremsscheibenzugewandten Seite an einem in der Richtung der Bremsscheibe (2) beweglichen Druckstück (9) und auf ihrer bremsscheibenabgewandten Seite an einem Element (14) abstützt, zu dem das Druckstück (9) relativbeweglich ist, wobei die Abstützung auf der bremsscheibenzugewandten Seite derart ist, daß die Zuspannwelle (8) bezüglich einer Verdrehung um eine parallel zu ihrer Längsachse liegende erste Achse (P₂) von dem Druckstück (9) entkoppelt ist, jedoch bezüglich einer Verschiebung der ersten Achse (P₂) parallel zur Bremsscheibenebene mit dem Druckstück (9) gekoppelt ist, und
die Abstützung auf der bremsscheibenabgewandten Seite derart ist, daß die Zuspannwelle (8) bezüglich einer Verdrehung um eine parallel zu ihrer Längsachse liegende, nicht mit der ersten Achse (P₂) zusammenfallende zweite Achse (P₁) von dem Element (14) entkoppelt ist,
dadurch gekennzeichnet, daß
die Abstützung auf der bremsscheibenabgewandten Seite derart ist, daß die Zuspannwelle (8) bezüglich einer Verschiebung der zweiten Achse (P₁) parallel zur Bremsscheibenebene von dem Element (14) entkoppelt ist, und
das Druckstück (9) derart gelagert ist, daß es nur senkrecht zur Bremsscheibenebene beweglich ist.

2. Zuspannvorrichtung nach Anspruch 1, dadurch gekennzeichnet, daß sich die Zuspannwelle (8) auf der bremsscheibenzugewandten Seite über einen in einer ersten Lagerschale (19) gelagerten Ansatz (17) mit kreisbogenförmiger Außenkontur an dem Druckstück (9) abstützt.

3. Zuspannvorrichtung nach Anspruch 2, gekennzeichnet durch ein Dreh- oder Wälzlager (18) zwischen dem Ansatz (17) und der ersten Lagerschale (19).

4. Zuspannvorrichtung nach einem der vorangehenden Ansprüche, dadurch gekennzeichnet, daß sich die Zuspannwelle (8) auf der bremsscheibenabgewandten Seite über einen Wälzkörper (20) an dem Element (14) abstützt, der in einer an der Zuspannwelle (8) ausgebildeten zweiten Lagerschale (21) gelagert ist.

5. Zuspannvorrichtung nach Anspruch 4, dadurch gekennzeichnet, daß der Wälzkörper (20) eine Rolle ist.

6. Zuspannvorrichtung nach Anspruch 4 oder 5, dadurch gekennzeichnet, daß die zweite Lagerschale (21) den Wälzkörper (20) um mehr als 180° umschließt.

7. Zuspannvorrichtung nach einem der Ansprüche 4 bis 6, gekennzeichnet durch ein Dreh- oder Wälzlager zwischen dem Wälzkörper (20) und der zweiten Lagerschale (21).

8. Zuspannvorrichtung nach einem der vorangehenden Ansprüche, dadurch gekennzeichnet, daß die erste Achse (P₂) im Ruhezustand der Bremse weiter von der Bremsscheibenebene entfernt ist als die zweite Achse (P₁).

9. Zuspannvorrichtung nach einem der vorangehenden Ansprüche, dadurch gekennzeichnet, daß das Druckstück (9) im Bremssattel (1) in seitlich kalottenförmigen Führungen (25) allseitig geführt ist.

10. Zuspannvorrichtung nach einem der Ansprüche 1 bis 8, dadurch gekennzeichnet, daß die Lagerung für das Druckstück (9) eine Anzahl Teillager umfaßt, wobei sich mindestens zwei Teillager dadurch voneinander unterscheiden, daß sie voneinander unterschiedliche Komponenten auf das Druckstück wirkender Kräfte aufnehmen.

11. Zuspannvorrichtung nach einem der vorangehenden Ansprüche, gekennzeichnet durch eine Vorspannung (23) in Richtung eines Lösens der Bremse.

## Claims

1. Clamping unit of u disc brake, specifically a floating caliper disc brake, with the clamping shaft (8) positioned parallel to the brake disc, abutting against a movable thrust piece (9) in the direction of the brake disc (2) which on the opposite side of the disc abuts an element (14) to which the thrust piece (9) can move relatively, whereby the anchoring method on the brake disc side allows that the clamping shaft (8) via parallel rotation along the first spindle (P₂) disconnects from the thrust piece (9) and by repositioning of the first spindle (P₂) parallel to the brake disc couples with the thrust piece (9), and
where the abutment on the brake disc side has been configured so that the clamping shaft (8) according to one parallel rotation along its axis does not disconnect from the element (14)
characterised by
the abutment opposite the brake disc being configured so that the clamping shaft (8) by repositioning of the second axis (P₁) parallel to the brake disc disengages from the element (14) and
the thrust piece (9) is located so that it can only move vertically relative to the centreline of the brake disc.

2. Clamping unit according to claim 1, characterised by the clamping shaft (8) on the brake disc side being held in the first step (17) of a bearing cup (19) with a circular outside contour against the thrust piece (9).

3. Clamping unit according to claim 2, characterised by a roller bearing (18) being located between the step (17) and the first bearing cup (19).

4. Clamping unit according to one of the above listed claims, characterised by the clamping shaft (8) being supported on the opposite side of the brake disc by a barrel shaped body (20) which conforms to the second bearing cup (21) incorporated into the clamping shaft (8).

5. Clamping unit according to claim 4, characterised by the barrel shaped body (20) being a roller.

6. Clamping unit according to claims 4 or 5, characterised by the second bearing cup (21) covering more than 180° of the roller (20) circumference.

7. Clamping unit according to claims 4 to 6, characterised by a roller bearing being located between roller (20) and the second bearing cup (21).

8. Clamping unit according to one of the above claims, characterised by the first spindle (P₂) when in the neutral position being located farther from the centreline of the brake disc than the second spindle (P₁).

9. Clamping unit according to one of the above listed claims, characterised by the thrust piece (9) being guided on all sides in the brake caliper (1) within spherical indentations (25).

10. Clamping unit according to claims 1 to 8, characterised by the bearing for the thrust piece (9) surrounding a number of sectional bearings, whereby a minimum of 2 of these sectional bearings differ from each other in that they can accept varying amounts of torque excerted upon the thrust piece.

11. Clamping unit according to one of the above listed claims, characterised by residual tension in the release direction of the brake.

## Revendications

1. Dispositif d'application d'un frein à disque, en particulier d'un frein à disque à étrier coulissant, avec un arbre de commande (8) disposé parallèlement au plan du disque de frein (2), prenant appui par sa face orientée vers le disque de frein (2) sur une pièce de poussée (9) qui peut se déplacer en direction du disque de frein (2), et par sa face opposée au disque de frein (2) sur un élément (14) par rapport auquel la pièce de poussée (9) est en mouvement relatif, l'appui sur la face orientée vers le disque de frein (2) étant tel que l'arbre de commande (8) est découplé de la pièce de poussée (9) relativement à une rotation autour d'un premier axe (P₂) parallèle à son axe longitudinal mais néanmoins solidaire de la pièce de poussée (9) relativement à un déplacement du premier axe (P₂) parallèlement au plan du disque de frein (2), et
l'appui sur la face opposée au disque de frein (2) étant tel que l'arbre de commande (8) est découplé de l'élément (14) relativement à une rotation autour d'un deuxième axe (P₁) parallèle à son axe longitudinal mais ne coïncidant pas avec le premier axe (P₂),
caractérisé en ce que
l'appui sur la face opposée au disque de frein (2) est tel que l'arbre de commande (8) est découplé de l'élément (14) relativement à un déplacement du deuxième axe (P₁) parallèlement au plan du disque de frein (2) et
en ce que la pièce de poussée (9) est disposée de telle sorte qu'elle ne peut subir que des mouvements perpendiculaires au plan du disque de frein (2).

2. Dispositif d'application selon la revendication 1, caractérisé en ce que, du côté orienté vers le disque de frein (2), l'arbre de commande (8) prend appui sur la pièce de poussée (9) par l'intermédiaire d'un épaulement (17) au contour extérieur en arc de cercle reposant sur une première coquille de coussinet (19).

3. Dispositif d'application selon la revendication 2, caractérisé par un palier de pivotement ou de roulement (18) entre l'épaulement (17) et la première coquille de coussinet (19).

4. Dispositif d'application selon l'une quelconque des revendications précédentes, caractérisé en ce que du côté opposé au disque de frein, l'arbre de commande (8) prend appui par l'intermédiaire d'un organe de roulement (20) sur un élément (14) qui repose sur une seconde coquille de coussinet (21) formée dans l'arbre de commande (8).

5. Dispositif d'application selon la revendication 4, caractérisé en ce que l'organe de roulement (20) est un rouleau.

6. Dispositif d'application selon l'une des revendications 4 ou 5, caractérisé en ce que la seconde coquille de coussinet (21) s'enroule sur plus de 180° autour de l'organe de roulement (20).

7. Dispositif d'application selon l'une quelconque des revendications 4 à 6, caractérisé par un palier de pivotement ou de roulement entre l'organe de roulement (20) et la seconde coquille de coussinet (21).

8. Dispositif d'application selon l'une quelconque des revendications précédentes, caractérisé en ce que le premier axe (P₂) se trouve plus éloigné du plan du disque de frein (2) que le deuxième axe (P₁) lorsque le frein est au repos.

9. Dispositif d'application selon l'une quelconque des revendications précédentes, caractérisé en ce que la pièce de poussée (9) est guidée de tous côtés dans l'étrier de frein (1) par des guides (25) de forme concave.

10. Dispositif d'application selon l'une quelconque des revendications 1 à 8, caractérisé en ce que le logement de la pièce de poussée (9) comporte un certain nombre de paliers partiels, sachant qu'au moins deux paliers partiels se distinguent l'un de l'autre par le fait qu'ils supportent l'un et l'autre des composantes différentes d'efforts agissant sur la pièce de poussée.

11. Dispositif d'application selon l'une quelconque des revendications précédentes, caractérisé par une précontrainte (23) dans le sens d'un relâchement du frein.
